Europäisches Patentamt

European Patent Office

Office européen des brevets

(11) Publication number: **0 401 617**
**A1**

# EUROPEAN PATENT APPLICATION

(21) Application number: **90109952.3**

(22) Date of filing: **25.05.90**

(51) Int. Cl.⁵: **A23G 9/20, A23G 9/22**

(30) Priority: **07.06.89 IT 1251289**

(43) Date of publication of application:
**12.12.90 Bulletin 90/50**

(84) Designated Contracting States:
**AT BE CH DE DK ES FR GB GR LI LU NL SE**

(71) Applicant: **Carpigiani S.r.L.**
**45, Via Emilia**
**I-40011 Anzola Emilia, Bologna(IT)**

(72) Inventor: **Manfroni, Ezio**
**56, via Altopiano**
**I-40037 Sasso Marconi, Bologna(IT)**

(74) Representative: **Porsia, Attilio, Dr. et al**
**c/o Succ. Ing. Fischetti & Weber Via Caffaro**
**3/2**
**I-16124 Genova(IT)**

(54) Ice cream making machine.

(57) This invention relates to an ice cream making machine, comprising a freezing cylinder (2) provided with refrigerating means (3,4,5) and with a rotating stirrer (6). The liquid ice cream mixture, together with some air, is fed to the cylinder (2) by a piston pump (11), two deparate suction ducts (17,18) being provided for either the air and liquid ice cream mixture, respectively, each duct being provided with a flow-regulating valve (21,22). According to the invention, the pump (11) is of the piston type and its delivery opening (13) is connected directly to the feeding nozzle (14) of the freezing cylinder (2). Said pump is arranged in such a position as to be easily accessible and removable from the outside. The regulating valves (21,22) on the suction ducts (17,18) for air and liquid mixture consist of solenoid valves controlled by an electro-mechanical or electronic device (23) and their opening periods control the total amount of air and ice cream liquid mixture to be pumped into the freezing cylinder, as well as the ratio between air and ice cream liquid mixture attendant the pumped total amount.

Fig.1

The invention relates to an ice cream making machine, comprising a freezing cylinder provided with refrigerating means and with a rotating stirrer within said freezing cylinder and a pump for feeding the ice cream liquid mixture, together with some air, into the freezing cylinder, said pump being, preferably, of the piston type, two separate suction ducts being provided for the air and ice cream liquid mixture, respectively, each duct being provided with a flow-regulating valve.

A particular problem in the machines for the production of foodstuffs is their cleanness requirements, the Health Regulations being generally very stringent under this respect. This problem is of considerable importance in the ice cream making machines, since the materials being worked therein are liable to deteriorate rapidly and promote bacteria development. Cleanness of these machines, therefore, is of substantial importance and dictates their construction to a great extent.

In most cases, the pump is connected to the freezing cylinder through a plurality of comparatively long ducts. The cleaning of the pump and ducts, therefore, is very troublesome and difficult, and it requires much work. Moreover, said pumps have a much complicated construction which, besides requiring an extensive constructional expenditure, makes cleaning operations still more difficult.

The comparatively complicated construction of conventional pumps is also caused by the necessity to solve the problem of regulating the mixing ratio of air and liquid ice cream mixture and the total amount of air and liquid mixture to be pumped into the freezing cylinder. In facts, said regulations are presently effected manually.

The invention aims to provide an ice cream making machine of the type described in the preamble, whereby the said disadvantages of the known machines can be avoided, i.e. an ice cream making machine which is provided with a pump for feeding the mix of air and ice cream liquid mixture, said pump being of simple and inexpensive construction and adapted to be cleaned and disassembled very easily, and being provided with means for regulating in a simple and reliable manner both the volume of the mix of air and ice cream liquid mixture fed into the freezing cylinder and the proportions of said components in said volume

The invention solves this problem by an ice cream making machine of the type described in the preamble, wherein the delivery opening of the pump for feeding air and ice cream liquid mixture is connected directly to the feeding nozzle of the freezing cylinder, and said pump is arranged in such a position as to extend, at least partly, outside the frame of the machine, whereby it is readily accessible and removable from the outside.

Thanks to this arrangement of the pump for feeding air and ice cream liquid mixture, the possible delivery ducts from the pump to the feeding duct for the freezing cylinder are avoided, whereby the parts to be cleaned that are not readily accessible and removable are reduced, while said pump can be removed and cleaned from the outside with great ease and reliability.

According to a preferred embodiment of the invention, the pump is comprised of a piston pump whose cylinder is secured directly to the freezing cylinder. The piston is introduced into the cylinder from the outside towards the central axis of the freezing chamber and is reciprocated in this direction. Due to this particular construction, cleaning operations are further simplified. In this connection, in facts, the piston can be easily extracted from the cylinder of the feeding pump which, therefore, is opened towards the outside and can be cleaned perfectly, not only by means of particular cleaning materials, but also with a mechanical action, if required.

According to a further advantageous characteristic of the invention, the delivery opening of the pump is also, at the same time, the suction opening thereof. In facts, between said suction and delivery opening and the feeding nozzle of the freezing cylinder there is arranged a non-return valve which prevents the contents of the freezing cylinder from being sucked out during the suction step of the pump. The suction ducts for air and ice cream liquid mixture open into the duct which forms the suction and delivery opening of the pump, upstream of the non-return valve, with reference to the direction of compression of the pump.

The regulation of the total amount of mix of air and ice cream liquid mixture, and the regulation of the proportions of both these components in said total amount can be effected readily and promptly, by acting on suitable outer controls, e.g. two knobs or the like, of the electro-mechanical or electronic devices controlling the regulating solenoid valves. Thanks to the above, any waste of time is avoided, and the quality of the product is considerably improved.

According to a particular advantageous embodiment of the invention, the total amount of air and ice cream liquid mixture being pumped into the freezing cylinder can be determined by regulating the opening periods of the respective solenoid valves for air and ice cream liquid mixture, during the suction step of the pump. The ratio between air and ice cream liquid mixture attendant said total amount is determined by the opening periods during the suction step of the two solenoid valves. Thanks to the above, the piston pump may be operated at constant speed.

The invention relates as well to further characteristics which improve further said ice cream making machine and which are the subject of the sub-claims.

The particular characteristics of the invention and the advantages resulting therefrom will become apparent with more details from the description of a preferred embodiment thereof, shown by way of non-limiting example in the accompanying drawings, wherein:

Figure 1 is a diagrammatic sectional view of an exemplary embodiment of the ice cream making machine according to the invention.

Figure 2 is a diagrammatic cross sectional view of the feeding pump of Figure 1, with the associated actuating unit.

Figure 3 is a perspective view of a detail of the feeding pump of Figure 1.

Figure 4 is a sectional view of the actuating unit, taken on the line IV-IV of Figure 2.

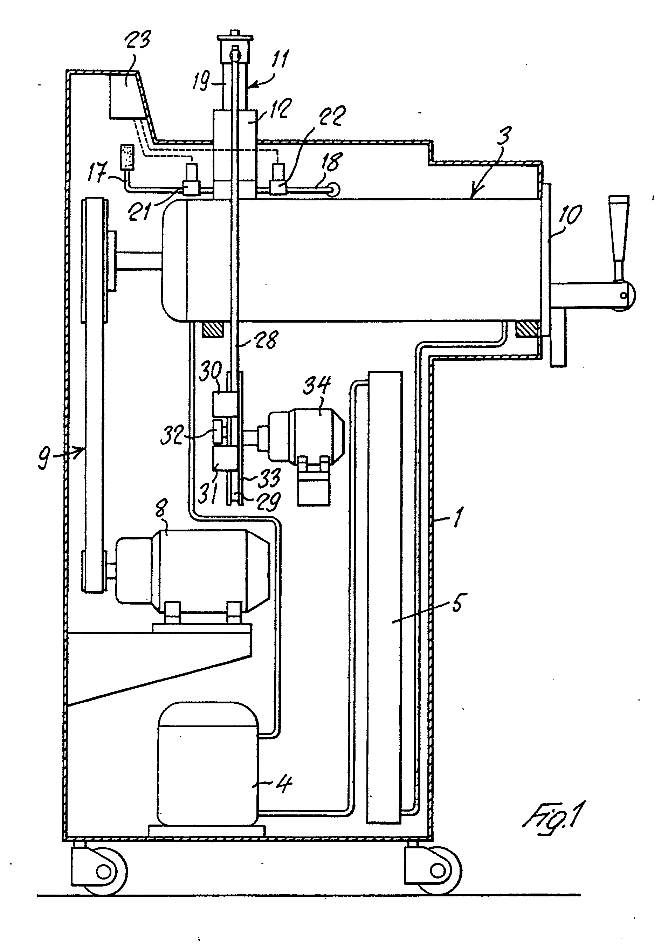

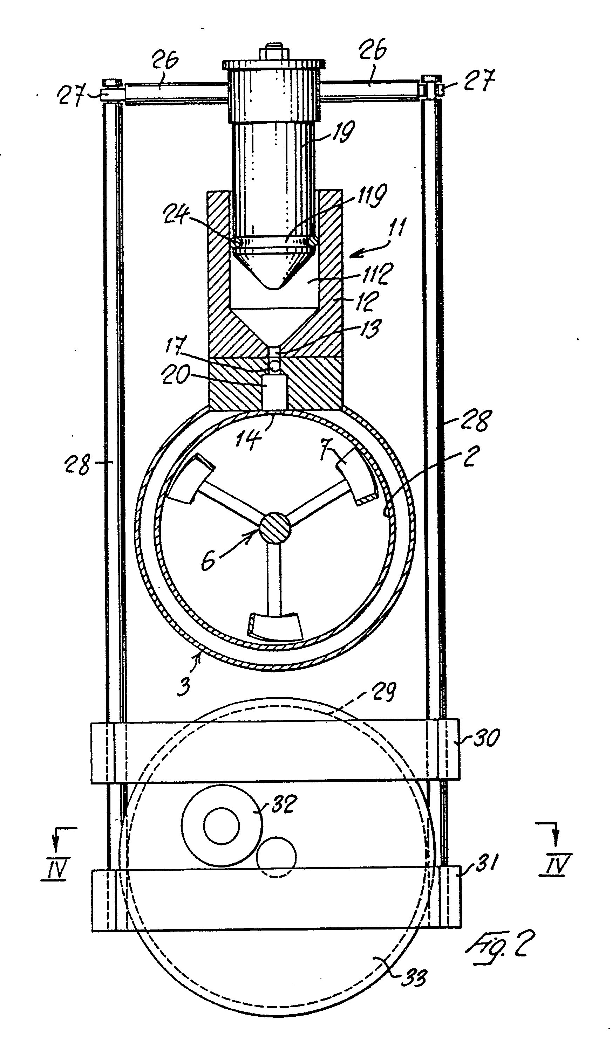

The ice cream making machine shown in Figure 1 comprises a frame 1 wherein the freezing cylinder 2 is supported. Said freezing cylinder 2 is, in particular, a stationary cylinder (Figure 2) which is surrounded by an evaporator which is shown diagrammatically and is indicated at 3. The evaporator 3 forms part of an usual refrigerating circuit comprising also a compressor 4 and a condenser 5. As apparent from Figure 2, said stationary cylinder accommodates a co-axial stirrer 6, more particularly a stirrer with helical blades 7, which is rotated within the freezing cylinder 2 by means of a motor 8 secured to the frame 1 and a belt drive 9, or the like. The freezing cylinder 2 is arranged horizontally and its inwardly-directed head end is suitably closed, while its outwardly-directed head end is open so as to permit the stirrer 6 to be introduced there into and extracted therefrom. The freezing cylinder 2 may be sealingly closed by a suitable cover 10.

Secured directly to the peripheral wall of the freezing cylinder 2 is a piston pump indicated generally at 11 and shown with more detail in Figure 2.

The piston pump 11 comprises a cylinder 12 having a cylindrical bore 112 which is conically tapered towards the freezing cylinder, i.e. towards its suction and delivery opening 13. The cylindrical bore 112 is secured to the freezing cylinder 2 so that its suction and delivery opening coincides with the feeding nozzle 14 of said freezing cylinder 2. The two suction ducts 17,18 for air and for ice cream liquid mixture, respectively, open into said bore 112. A non-return valve 20 prevents the contents of the freezing cylinder from being sucked out during the step of suction of air and ice cream liquid mixture.

Each feeding duct 17,18 is provided, upstream of the pump 11, with a regulating solenoid valve 21,22 which is controlled by an electro-mechanical or electronic device shown diagrammatically at 23. Said device 23 may be provided with regulating knobs (not shown), for example, for separately regulating the individual solenoid valves 21,22.

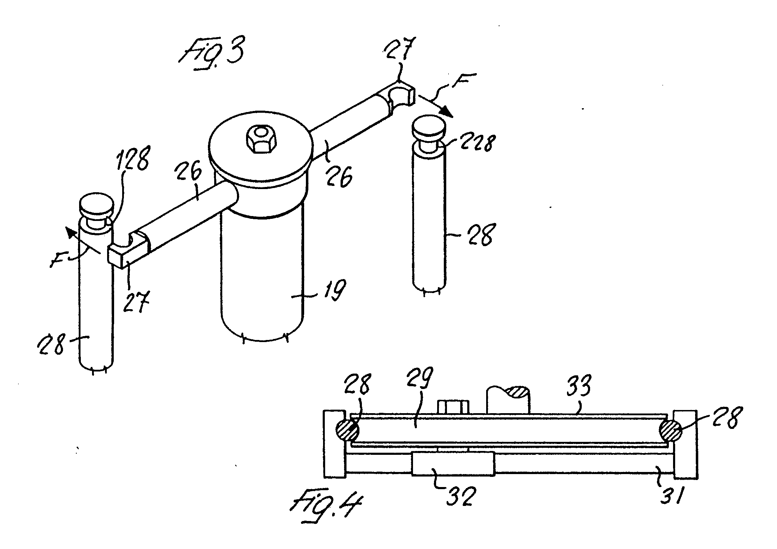

The piston 19 of the piston pump 11 has a shape matching with that of the cylinder bore 112, in that it is also conically tapered at its end directed towards the suction and delivery opening 13 of the pump 11. It is provided with a sealing ring 24, more particularly an O-ring, accommodated in a mating annular groove 119. The free end of the piston 19 away from the cylinder 2 is traversed diametrically by a cross-beam 26 the free ends of which protrude radially outwards and are each shaped as a hook 27. The recesses of the hooks 27 are directed to the same side with reference to the direction of rotation of the piston 19 about its axis as indicated by the arrows F in Figure 3. The piston 19 may be displaced angularly from a locked position wherein each hook 27 engages a corresponding groove 128 in the free end portion of a rod 28 to an angularly disengaged position, and vice versa. The two rods 28 extend parallelly to each other and parallelly to the direction of the piston stroke. They are connected to each other at the end away from the piston 19 by means of two parallel transoms 30 and 31 and they are guided and centered by a semi-circular groove 29 of a wheel 33 which is rotated by means of a motor 34 supported by the frame of the machine and is provided with an excentric roller 32 engaged in the gap between the transoms 30,31.

The operation of the device according to the invention is extremely simple and efficient. The cam 33, by its rotation, through the rods 28, reciprocates linearly the piston 19 in the cylinder 12. During the suction step, the non-return valve presents the contents in the freezing cylinder from being sucked out, while the solenoid valves 21 and 22 establish, under the command of the electronic or electro-mechanical device, the desired total amount of air and ice cream liquid mixture to be fed into the freezing cylinder 2 as well as their ratio attendant said total amount.

According to the invention, the total amount of air and ice cream liquid mixture is established by the opening periods of the two solenoid valves 21,22 during the suction step. On the other side, the ratio between the air and ice cream liquid mixture corresponds to the ratio between the opening periods of the respective solenoid valves 21 and 22 during the suction step.

During the compression step, the non-return valve opens and permits the mix of air and ice cream liquid mixture to pass from the pump 11 into the freezing cylinder 2. In this connection, means are provided to prevent said mix of air and ice cream liquid mixture from returning into the suction ducts 17 and 18 for air and ice cream liquid mixture. Said means may also comprise either simple non-return valves or other means (not shown) or said solenoid valves 21,22.

The particular construction of the pump 11 and drive means to actuate the piston 19, moreover, permit the piston 19 to be disassembled by merely disengaging the piston 19 by rotating the cross-beam 26 oppositely to the arrows F of Figure 3. The hooks 27 of the free ends of the cross-beam 26 are thus disengaged from the grooves 128 of the rods 28 and the piston 19 may be extracted from the cylinder 12 which, by protruding outwards beyond the frame of the machine, is quite accessible and can be cleaned even manually. The re-assembling of the piston after cleaning is similarly simple and is carried out by operations reverse to those described above.

In the preferred embodiment illustrated herein, the cylinder 12 and, therefore, the piston 19 and the direction of the stroke thereof, are disposed vertically to ease further the cleaning operations. As appearing from the above description, the internal ducts of the machine are extremely short, which simplifies further the cleaning thereof.

Of course, the invention is not limited to the embodiments described and shown, and broad changes, especially of constructional nature, may be made thereto. In lieu of a piston pump, in facts, the ice cream making machine according to the invention may be provided with other types of pumps whose delivery opening is connected directly to the feeding nozzle of the freezing cylinder and which are so arranged as to be easily accessible and removable from the outside.

## Claims

1. An ice cream making machine comprising a freezing cylinder (2) provided with refrigerating means (3,4,5); a stirrer (6) rotatably mounted within said freezing cylinder (2) and a pump (11) for feeding the ice cream liquid mixture together with some air into the freezing cylinder, two separate suction ducts (17,18) being provided for the air and ice cream liquid mixture, respectively, each duct being provided with a flow-regulating valve (21,22), characterized in that said pump (11) for feeding the air and ice cream liquid mixture is connected through its delivery opening (13) directly to the feeding nozzle (14) of the freezing cylinder (2) and is arranged vertically on the inlet into the cylinder in such a position as to extend at least partly outside the frame (1) of the machine, so as to be easily accessible and removable from the outside, while the regulating valves (21,22) arranged in the suction ducts (17,18) for the air and ice cream liquid mixture and connected to the suction opening (13) of the pump (11) consist of solenoid valves which are controlled by means of an electro-mechanical or electronic device (23).

2. A machine according to claim 1, characterized in that the pump (11) is a piston pump whose cylinder (12) protrudes beyond the frame (1) of the machine and is secured to the freezing cylinder (2) and whose piston (19) is introduced into the cylinder (12) of the pump (11) from the outside in a direction towards the central axis of the freezing cylinder (2), easily removable means (25,26,27,28,30,31,32, 33,34) being provided to engage and operate said piston (19) in the associated cylinder (12), so as to permit said piston to be easily extracted, said means (25,26,27,28,30,31,32,33,34) imparting the piston (19) a reciprocating motion in said direction.

3. A machine according to claim 2, characterized in that once the piston (19) has been extracted the cylindrical bore (112) of the cylinder (12) is open and accessible from the outside of the frame (1) of the machine.

4. A machine according to one or more of the preceding claims, characterized in that said pump (11) is provided, on the suction side, with a non-return valve (20) which prevents the contents of the freezing cylinder (2) from being sucked out during the suction step of the pump (11), while in the suction ducts (17,18) for the air and ice cream liquid mixture there may be provided on-off means which may consist of non-return valves, or other similar means, or said regulating solenoid valves (21,22).

5. A machine according to one or more of the preceding claims, characterized in that said means for engaging and operating the piston (19) consist of two rods which are parallel to the direction of movement of the piston (19), are disposed side by side therewith, and are reciprocated in said direction, and the free ends of which are removably engaged with means secured to said piston (19).

6. A machine according to claim 5, characterized in that said means secured to the piston (19) consists of a beam (26), said beam (26) being provided at the ends thereof with hook-like engaging means (27), said engaging means being designed to engage with corresponding grooves (128) formed in the free end portions of said rods (28).

7. A machine according to one or more of the preceding claims, characterized in that said rods (28) for actuating the piston (19) are actuated by a rotatable wheel (33) provided with a crank-like excentric roller (32) co-operating with the transoms (30,31) having connected thereto the ends of the two actuating rods (28) which are centered and guided by the semi-circular groove in the wheel (33).

8. A machine according to one or more of the preceding claims, characterized in that the piston pump (11) is arranged on the freezing cylinder (2) and is disposed so that the piston (19) is moved in a vertical direction.

9. A machine according to one or more of the preceding claims, characterized in that the electronic or electro-mechanical device (23) controlling the solenoid valves (21,22) is provided with external controls for its adjustment.

10. A machine according to one or more of the preceding claims, characterized in that the piston pump is a constant-speed pump and the total amount of air and ice cream liquid mixture being pumped is established by the opening periods and/or opening degree, during the suction step, of the two valves (21,22) constituted more particularly by solenoid valves.

11. A machine according to one or more of the preceding claims, characterized in that said pump (11) is operated at constant speed and the ratio between air and ice cream liquid mixture is established by the ratio between the opening periods during the suction step of the respective two solenoid valves (21,22).

12. A machine according to claim 11, wherein the ratio between air and liquid mixture can be maintained automatically during the changes in the regulation of the liquid mixture flowrate.

13. A machine according to one or more of the claims 3 to 9, characterized in that said piston pump (11) may be used for either the initial filling up of the freezing cylinder (2), or for dispensing washing and sterilizing solutions during the cleaning steps after closing the air valve.

14. A machine according to one or more of the preceding claims, characterized in that the piston pump can dispense the maximum flowrate through the air solenoid valve (21) and can be used for the final emptying of the freezing cylinder (2) during the cleaning operations, after closing the liquid valve.

15. A machine according to the preceding claims, characterized in that it comprises means for checking the ice cream consistency and means for checking the pressure within the freezing cylinder, to enable the machine to be operated in a discontinuous manner.

Fig.1

Fig. 2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 829 242  (DUKE et al.)<br>* Column 2, lines 5-37; column 3, lines 27-38,55-58; column 5, lines 19-21; column 6, line 19 - column 7, line 38; column 9, lines 45-60; column 10, lines 19-37; claims 1,2,11,12; figures 1-5 *<br>--- | 1-4,8,9 ,13-15 | A 23 G   9/20<br>A 23 G   9/22 |
| Y | US-A-3 823 571  (SMITH et al.)<br>* Column 3, line 63 - column 4, line 25; claim 1; figure 1 *<br>--- | 1-4,8,9 ,13-15 | |
| A | US-A-2 952 140  (CLYDE PATTY)<br>* Figure 1; column 2, line 35 - column 3, line 5; claim 1 *<br>--- | 1,5-7 | |
| A | EP-A-0 066 756  (COLDELITE CORP. OF AMERICA)<br>* Page 3, lines 5-11,26-30; page 15, line 18 - page 16, line 2; claim 1; figures 1,4 *<br>--- | 1-3,8 | |
| A | FR-A-2 616 043  (GOAVEC S.A.)<br>--- | | TECHNICAL FIELDS SEARCHED (Int. Cl.5)<br><br>A 23 G |
| A | US-A-3 726 102  (C.K. PARKS)<br>----- | | |

The present search report has been drawn up for all claims

| Place of search | Date of completion of the search | Examiner |
|---|---|---|
| THE HAGUE | 11-09-1990 | LEPRETRE F.G.M.J. |